# EUROPEAN PATENT APPLICATION

(11) **EP 2 787 751 A1**
(43) Date of publication of application: **08.10.2014**
(21) Application number: 13834355.3
(22) Date of filing: 30.01.2013
(51) Int. Cl.: H04W 8/00

(54) **METHOD FOR AUTOMATICALLY DELETING 2 CONFIGURATION, BASE STATION, AND NETWORK SYSTEM**

(71) Applicant: Huawei Technologies Co., Ltd., Shenzhen, Guangdong 518129 (CN)
(72) Inventor: WANG, Yan, Shenzhen, Guangdong 518129 (CN); WANG, Zhifeng, Shenzhen, Guangdong 518129 (CN); XU, Jianguo, Shenzhen, Guangdong 518129 (CN)
(74) Representative: Pfenning, Meinig & Partner GbR
(86) International application number: PCT/CN2013/071158
(87) International publication number: WO 2014/117346

(57) **Abstract**

Embodiments of the present invention disclose a method, a base station, and a network system for automatic X2 configuration deletion, where implementation of the method includes: acquiring, by a first base station, neighboring-cell configuration data of a second base station; determining, by the first base station according to neighboring-cell configuration data of the first base station and the neighboring-cell configuration data of the second base station, whether a neighboring-cell relationship exists between the first base station and the second base station; and if no neighboring-cell relationship exists between the first base station and the second base station, deleting X2 configuration data corresponding to an X2 interface between the first base station and the second base station. The foregoing solution implements automatic deletion of redundant X2 configuration data and does not require that the first base station and the second base station be managed by a same network management system, thereby implementing distributed management of the X2 configuration data, so that application scenarios become wider.

## Description

### TECHNICAL FIELD

The present invention relates to the field of communications technologies, and in particular, to a method, a base station, and a network system for automatic X2 configuration deletion.

### BACKGROUND

In a Long Term Evolution (long term evolution, LTE) system, communication can be performed between base stations (enhanced NodeB, eNodeB) through an X2 interface. Currently, an LTE protocol supports a function of automatically setting up an X2 interface; however, it does not define a function of automatically deleting an X2 interface. As an LTE network dynamically changes, an X2 interface that has been set up may become a redundant configuration. If the configuration is not cleaned up in time, redundant configuration may occupy existing X2 interface configuration resources, so that a new X2 interface cannot be added.

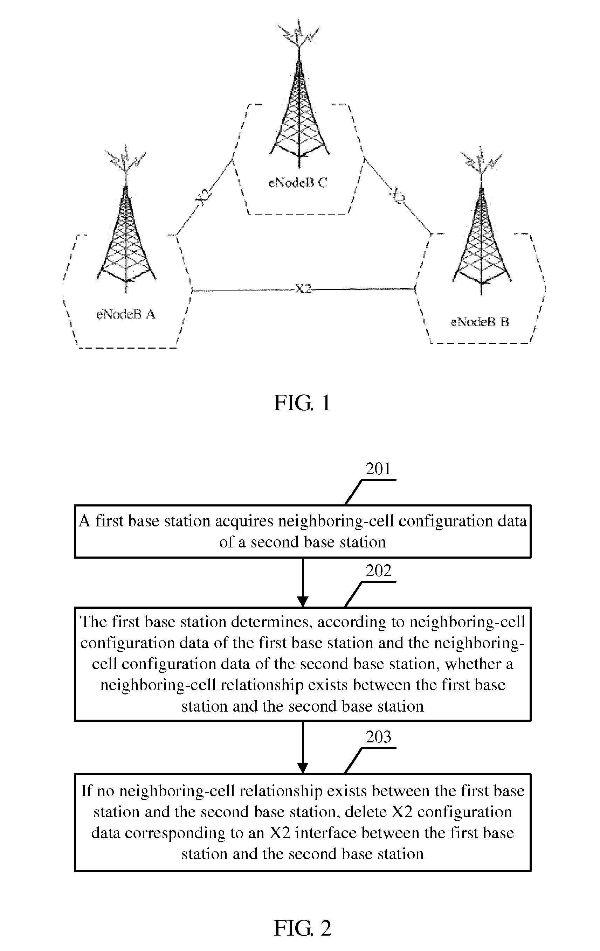

Refer to a schematic diagram of a base station system shown in FIG. 1. This figure provides a scenario in which a redundant X2 configuration is generated. The scenario is specifically as follows:

At an initial network construction phase, eNodeB A and eNodeB B are enabled first, and an X2 interface between eNodeB A and eNodeB B is set up by using an automatic X2 setup process. During network construction, stations are generally set up in an interspersed manner. Assume that eNodeB C is enabled subsequently, after eNodeB C is enabled, coverage relationships between the three base stations in FIG. 1 will change, and an X2 interface from eNodeB A to eNodeB C and an X2 interface from eNodeB C to eNodeB B are separately set up by using an automatic X2 setup function. In this case, the X2 interface previously set up between eNodeB A and eNodeB B becomes a redundant X2 configuration, and it is necessary to clean up configuration data corresponding to the X2 interface between eNodeB A and eNodeB B.

If a redundant X2 configuration is cleaned up manually, a large amount of manpower is required. Currently, the redundant X2 configuration can be generally cleaned up automatically by using a centralized solution. A prerequisite for implementing the solution is that eNodeBs on a network are managed by a same network management system.

An application scenario of the centralized solution is limited to a case in which X2 local end and peer end base stations are managed by a same network management system. In a scenario in which they are not managed by a same network management system, the solution cannot be implemented.

### SUMMARY

In view of this, embodiments of the present invention provide a method, a base station, and a network system for automatic X2 configuration deletion, to make application scenarios wider.

A first aspect of the embodiments of the present invention provides a method for automatic X2 configuration deletion, including:
acquiring, by a first base station, neighboring-cell configuration data of a second base station;
determining, by the first base station according to neighboring-cell configuration data of the first base station and the neighboring-cell configuration data of the second base station, whether a neighboring-cell relationship exists between the first base station and the second base station; and
if no neighboring-cell relationship exists between the first base station and the second base station, deleting X2 configuration data corresponding to an X2 interface between the first base station and the second base station.

With reference to the implementation solution of the first aspect, the determining, by the first base station according to neighboring-cell configuration data of the first base station and the neighboring-cell configuration data of the second base station, whether a neighboring-cell relationship exists between the first base station and the second base station includes: determining, by the first base station according to the neighboring-cell configuration data of the first base station, whether neighboring cells of the first base station include none of all cells of the second base station, and determining that no neighboring-cell relationship exists between the first base station and the second base station; and
if the neighboring cells of the first base station include none of all cells of the second base station and the neighboring cells of the second base station include none of all cells of the first base station, deleting the X2 configuration data corresponding to the X2 interface between the first base station and the second base station.

With reference to the implementation solution of the first aspect, in a first possible implementation solution, the method further includes:
storing a flag for each cell of the second base station, where the flag is used to identify whether to configure the first base station as a neighboring cell; and if the first base station receives update information of the neighboring-cell configuration data of the second base station, using the update information to update the flag.

With reference to the first aspect or the first possible implementation solution, in a second possible implementation solution, after the determining that the neighboring cells of the first base station include none of all cells of the second base station and the neighboring cells of the second base station include none of all cells of the first base station, and before the deleting X2 configuration data corresponding to an X2 interface between the first base station and the second base station, the method further includes:
starting an aging timer; and after the aging timer times out, if the neighboring cells of the first base station still include none of all cells of the second base station and the neighboring cells of the second base station still include none of all cells of the first base station, executing the deleting X2 configuration data corresponding to an X2 interface between the first base station and the second base station.

With reference to the second possible implementation solution, in a third possible implementation solution, before the executing the deleting X2 configuration data corresponding to an X2 interface between the first base station and the second base station, the method further includes:
sending a first message to the second base station, so as to request the second base station to return full neighboring-cell configuration data of the second base station; determining, according to the full neighboring-cell configuration data of the second base station, whether the neighboring cells of the second base station include none of all cells of the first base station; and if the neighboring cells of the second base station include none of all cells of the first base station, executing the deleting X2 configuration data corresponding to an X2 interface between the first base station and the second base station. The first message may be a private message between base stations.

With reference to the first aspect or the first possible implementation solution, in a fourth possible implementation solution, the method further includes:
sending, by the first base station, the neighboring-cell configuration data of the first base station and/or update information of the neighboring-cell configuration data of the first base station to the second base station.

A second aspect of the embodiments of the present invention provides a base station, including:
a receiving unit, configured to acquire neighboring-cell configuration data of a second base station, where the base station is a first base station;
a neighboring-cell determining unit, configured to determine, according to neighboring-cell configuration data of the first base station, whether neighboring cells of the first base station include none of all cells of the second base station, and determine, according to the neighboring-cell configuration data of the second base station received by the receiving unit, whether neighboring cells of the second base station include none of all cells of the first base station; and
a control unit, configured to delete X2 configuration data corresponding to an X2 interface between the first base station and the second base station if the neighboring-cell determining unit determines that the neighboring cells of the first base station include none of all cells of the second base station and the neighboring cells of the second base station include none of all cells of the first base station.

With reference to the implementation solution of the second aspect, in a first possible implementation solution, the base station further includes:
a storage unit, configured to store a flag for each cell of the second base station, where the flag is used to identify whether to configure the first base station as a neighboring cell;
the receiving unit, further configured to acquire update information of the neighboring-cell configuration data of the second base station; and
an updating unit, configured to, if the receiving unit receives the update information of the neighboring-cell configuration data of the second base station, use the update information to update the flag stored by the storage unit.

With reference to the second aspect or the first possible implementation solution, in a second possible implementation solution, the base station further includes:
an aging timer, configure to start after the neighboring-cell determining unit determines that the neighboring cells of the first base station include none of all cells of the second base station and the neighboring cells of the second base station include none of all cells of the first base station and before the control unit deletes the X2 configuration data corresponding to the X2 interface between the first base station and the second base station;
the neighboring-cell determining unit, further configured to determine, after the aging timer times out, whether the neighboring cells of the first base station still include none of all cells of the second base station and whether the neighboring cells of the second base station still include none of all cells of the first base station; and
the control unit, specifically configured to execute the deleting X2 configuration data corresponding to an X2 interface between the first base station and the second base station if the neighboring-cell determining unit determines, after the aging timer times out, that the neighboring cells of the first base station still include none of all cells of the second base station and that the neighboring cells of the second base station still include none of all cells of the first base station.

With reference to the second possible implementation solution, in a third possible implementation solution, a sending unit is configured to send a first message to the second base station before the control unit executes the deleting X2 configuration data corresponding to an X2 interface between the first base station and the second base station, so as to request the second base station to return full neighboring-cell configuration data of the second base station;
the receiving unit is further configured to receive the full neighboring-cell configuration data of the second base station returned by the second base station;
the neighboring-cell determining unit is further configured to determine, according to the full neighboring-cell configuration data of the second base station received by the receiving unit, whether the neighboring cells of the second base station include none of all cells of the first base station; and
the control unit is specifically configured to delete the X2 configuration data corresponding to the X2 interface between the first base station and the second base station if the neighboring-cell determining unit determines that the neighboring cells of the second base station include none of all cells of the first base station.

With reference to the second aspect or the first possible implementation solution, in a fourth possible implementation solution, the base station further includes:
a second sending unit, configured to send the neighboring-cell configuration data of the first base station and/or update information of the neighboring-cell configuration data of the first base station to the second base station.

A third aspect of the embodiments of the present invention provides a base station, including: a receiver, a processor, a memory, and a sender, where:
the receiver is configured to acquire neighboring-cell configuration data of a second base station, where the base station is a first base station; and
the processor is configured to: determine, according to neighboring-cell configuration data of the first base station, whether neighboring cells of the first base station include none of all cells of the second base station, and determine, according to the neighboring-cell configuration data of the second base station received by the receiver, whether neighboring cells of the second base station include none of all cells of the first base station; and if the neighboring cells of the first base station include none of all cells of the second base station and the neighboring cells of the second base station include none of all cells of the first base station, delete X2 configuration data corresponding to an X2 interface between the first base station and the second base station.

With reference to the implementation solution of the third aspect, in a first possible implementation solution, the receiver is further configured for the first base station to receive update information of the neighboring-cell configuration data of the second base station;
the memory is configured to store a flag for each cell of the second base station, where the flag is used to identify whether to configure the first base station as a neighboring cell; and
the processor is further configured to, if the receiver receives the update information of the neighboring-cell configuration data of the second base station, use the update information to update the flag.

With reference to the third aspect or the first possible implementation solution, in a second possible implementation solution, the processor is further configured to: start an aging timer after determining that the neighboring cells of the first base station include none of all cells of the second base station and the neighboring cells of the second base station include none of all cells of the first base station and before deleting the X2 configuration data corresponding to the X2 interface between the first base station and the second base station; and after the aging timer times out, if the neighboring cells of the first base station still include none of all cells of the second base station and the neighboring cells of the second base station still include none of all cells of the first base station, delete the X2 configuration data corresponding to the X2 interface between the first base station and the second base station.

With reference to the second possible implementation solution, in a third possible implementation solution, the sender is configured to send a first message to the second base station before the processor executes the deleting X2 configuration data corresponding to an X2 interface between the first base station and the second base station, so as to request the second base station to return full neighboring-cell configuration data of the second base station;
the receiver is further configured to receive the full neighboring-cell configuration data of the second base station returned by the second base station; and
the processor is specifically configured to: determine, according to the full neighboring-cell configuration data of the second base station received by the receiver, whether the neighboring cells of the second base station include none of all cells of the first base station; and if the neighboring cells of the second base station include none of all cells of the first base station, delete the X2 configuration data corresponding to the X2 interface between the first base station and the second base station.

With reference to the third aspect or the first possible implementation solution, in a fourth possible implementation solution, the sender is configured to send the neighboring-cell configuration data of the first base station and/or update information of the neighboring-cell configuration data of the first base station to the second base station.

A fourth aspect of the embodiments of the present invention provides a network system, including:
at least two base station, where the two base stations include the first base station and the second base station in any one of the solutions of the second aspect or the third aspect.

As can be seen from the foregoing technical solutions, the following advantages exist: In the foregoing solutions, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of networking of a base station in the prior art;
FIG. 2 is a schematic flowchart of a first method according to an embodiment of the present invention;
FIG. 3 is a schematic flowchart of a second method according to an embodiment of the present invention;
FIG. 4 is a schematic flowchart of a third method according to an embodiment of the present invention;
FIG. 5 is a schematic structural diagram of a first type of base station according to an embodiment of the present invention;
FIG. 6 is a schematic structural diagram of a second type of base station according to an embodiment of the present invention;
FIG. 7 is a schematic structural diagram of a third type of base station according to an embodiment of the present invention;
FIG. 8 is a schematic structural diagram of a fourth type of base station according to an embodiment of the present invention;
FIG. 9 is a schematic structural diagram of a fifth type of base station according to an embodiment of the present invention;
FIG. 10 is a schematic structural diagram of a sixth type of base station according to an embodiment of the present invention; and
FIG. 11 is a schematic structural diagram of a network system according to an embodiment of the present invention.

### DESCRIPTION OF EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

As shown in FIG. 2, an embodiment of the present invention provides a method for automatic X2 configuration deletion, including:

201: A first base station acquires neighboring-cell configuration data of a second base station.

A manner of acquiring, by the first base station, the neighboring-cell configuration data of the second base station may be using an X2 interface protocol message, such as an X2 SETUP REQUEST (X2 SETUP REQUEST), an X2 SETUP RESPONSE (X2 SETUP RESPONSE), and an ENB CONFIGURATION UPDATE (ENB CONFIGURATION UPDATE) in 36.423. It may be understood that the number of second base stations may be one or greater than one, and if the number of second base stations is greater than one, a solution for executing, by each base station as an independent entity, the method for automatic X2 configuration deletion is the same as a solution for executing, by one base station, the method for automatic X2 configuration deletion.

The neighboring-cell configuration data is information about a neighboring cell of the base station. It can be learned from the neighboring-cell configuration data whether the neighboring cell of the base station includes a cell. Including no cell means that there is no neighboring cell. The neighboring-cell configuration data may be embodied in a form of a neighboring-cell relationship table. The following is used as an example, in which it is assumed that eNodeB A is the first base station and eNodeB B is the second base station. Refer to Table 1, which shows an example of the neighboring-cell configuration data of the second base station:

**Table 1**

| **Base Station** | **Neighboring Cell** |
|---|---|
| eNodeB B | eNodeB C Cell 1 |
| eNodeB B | eNodeB C Cell ... |
| eNodeB B | eNodeB C Cell m |
| eNodeB B | eNodeB A NULL |

The last row in Table 1 may also not exist. Table 1 may indicate that neighboring cells of eNodeB B include none of all cells of eNodeB A and the neighboring cells of eNodeB B include m cells of eNodeB C. For a base station, the base station may know neighboring-cell configuration data of the base station itself; that is, it can be learned, from the neighboring-cell configuration data, information about whether neighboring cells of the base station include none of all cells of a peer base station.

Further, after the neighboring-cell configuration data of the second base station is acquired, neighboring-cell configuration data sent by the second base station subsequently may be only a changed part, that is, update information of the neighboring-cell configuration data. Specifically, after step 201, the method further includes: storing a flag for each cell of the second base station, where the flag is used to identify whether to configure the first base station as a neighboring cell; and if the first base station receives update information of the neighboring-cell configuration data of the second base station, using the update information to update the flag.

202: The first base station determines, according to neighboring-cell configuration data of the first base station and the neighboring-cell configuration data of the second base station, whether a neighboring-cell relationship exists between the first base station and the second base station.

Specifically, determining, by the first base station according to neighboring-cell configuration data of the first base station and the neighboring-cell configuration data of the second base station, whether a neighboring-cell relationship exists between the first base station and the second base station may be: determining, by the first base station according to the neighboring-cell configuration data of the first base station, whether neighboring cells of the first base station include none of all cells of the second base station and determining, according to the neighboring-cell configuration data of the second base station, whether neighboring cells of the second base station include none of all cells of the first base station; and if the neighboring cells of the first base station include none of all cells of the second base station and the neighboring cells of the second base station include none of all cells of the first base station, determining that no neighboring-cell relationship exists between the first base station and the second base station.

According to the preceding example, the first base station may learn, according to the neighboring-cell configuration data of the first base station, whether the neighboring cells of the first base station include none of all cells of the second base station; and the first base station may determine, according to the received neighboring-cell configuration data of the second base station, whether the neighboring cells of the second base station include none of all cells of the first base station. For the first base station, the solution of the neighboring-cell configuration data thereof is the same as that for the second base station. Reference may be made to Table 1, and details are not described herein again.

203: If no neighboring-cell relationship exists between the first base station and the second base station, delete X2 configuration data corresponding to an X2 interface between the first base station and the second base station.

It may be understood that if the neighboring cells of the first base station include a cell of the second base station or the neighboring cells of the second base station include a cell of the first base station, the X2 configuration data is not redundant data and it is unnecessary to delete the X2 configuration data.

In the foregoing solution, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

Further, to reduce a risk of deleting the X2 configuration data by mistake, this embodiment of the present invention further provides the following solution: In 203, after the determining that the neighboring cells of the first base station include none of all cells of the second base station and the neighboring cells of the second base station include none of all cells of the first base station and before the deleting X2 configuration data corresponding to an X2 interface between the first base station and the second base station, the method further includes: starting an aging timer; and after the aging timer times out, if the neighboring cells of the first base station still include none of all cells of the second base station and the neighboring cells of the second base station still include none of all cells of the first base station, executing the deleting X2 configuration data corresponding to an X2 interface between the first base station and the second base station.

In this embodiment, it can be monitored, by using the solution of using an aging timer, whether the neighboring cells of the first base station and the second base station still include none of all cells of their respective peer ends during expiration of the timer, that is, the state in which the neighboring cells of the first base station and the second base station still include none of all cells of their respective peer ends is stable; and in this case, an accuracy rate of determining that the X2 interface between the first base station and the second base station is redundant is higher. Therefore, the risk of deleting the X2 configuration data by mistake can be reduced.

Further, to keep synchronization of X2 configuration data deletion between the first base station and the second base station, this embodiment of the present invention further provides the following solution: Before the executing the deleting X2 configuration data corresponding to an X2 interface between the first base station and the second base station, the method further includes:
sending a first message to the second base station, so as to send full neighboring-cell configuration data of the first base station to the second base station and request the second base station to return full neighboring-cell configuration data of the second base station; determining, according to the full neighboring-cell configuration data of the second base station, whether the neighboring cells of the second base station include none of all cells of the first base station; and if the neighboring cells of the second base station include none of all cells of the first base station, deleting the X2 configuration data corresponding to the X2 interface between the first base station and the second base station. Likewise, the second base station determines, according to the full neighboring-cell configuration data of the first base station, whether the neighboring cells of the first base station include none of all cells of the second base station and, if the neighboring cells of the first base station include none of all cells of the second base station, deletes the X2 configuration data corresponding to the X2 interface between the first base station and the second base station.

The full neighboring-cell configuration data is relative to update information of the neighboring-cell configuration data. The update information is a changed part of the neighboring-cell configuration data, and the full neighboring-cell configuration data refers to all neighboring-cell configuration data of a base station.

In this embodiment, exchange and determining of full neighboring cells are performed by using a mechanism of an X2 first message; and with use of the message, a local end and a peer end of the X2 interface (that is, the first base station and the second base station) can be triggered to execute an action of deleting X2 configuration data simultaneously, so that a link alarm at a transport layer caused by inconsistent deletion time can be avoided.

It may be understood that the first base station may receive neighboring-cell configuration data of another base station and the first base station may also send neighboring-cell configuration data of the local end to the another base station, so that the another base station automatically determines whether to delete corresponding X2 configuration data. A specific solution is as follows, and the method further includes:
sending, by the first base station, the neighboring-cell configuration data of the first base station and/or update information of the neighboring-cell configuration data of the first base station to the second base station.

In addition, it should be noted that the first base station may determine, not according to the neighboring-cell configuration data of the second base station, whether the X2 interface is redundant and further delete redundant X2 configuration data. A solution may also be used, for example: whether data is transmitted at a transport layer between the two base stations within a set time is determined, and if no data is transmitted, it is determined that the X2 interface between the two base stations is redundant, and then X2 configuration data corresponding to the X2 interface can be deleted; or, whether data is transmitted over a data link of the X2 interface within a set time is determined , and if no data is transmitted, it is determined that the X2 interface between the two base stations is redundant, and then the X2 configuration data corresponding to the X2 interface can be deleted.

In addition, the foregoing solutions can be executed for all X2 interfaces on the first base station, and the method for automatic X2 configuration data deletion is a solution belongs to a self-organized network (Self-Organized Network, SON). If it is hoped that X2 configurations of a network are managed manually, but not all X2 configurations are managed automatically by the SON, a switch can be used for control, where the switch can be set to be at an eNodeB level. Specifically, for X2 configurations of an eNodeB, if a user hopes that a part of the X2 configurations are managed by the SON and a part of the X2 configurations are managed manually, a method for configuring an X2 whitelist can be used for implementation. X2 configuration data configured in the X2 whitelist is not processed when the automatic X2 deletion solution is used.

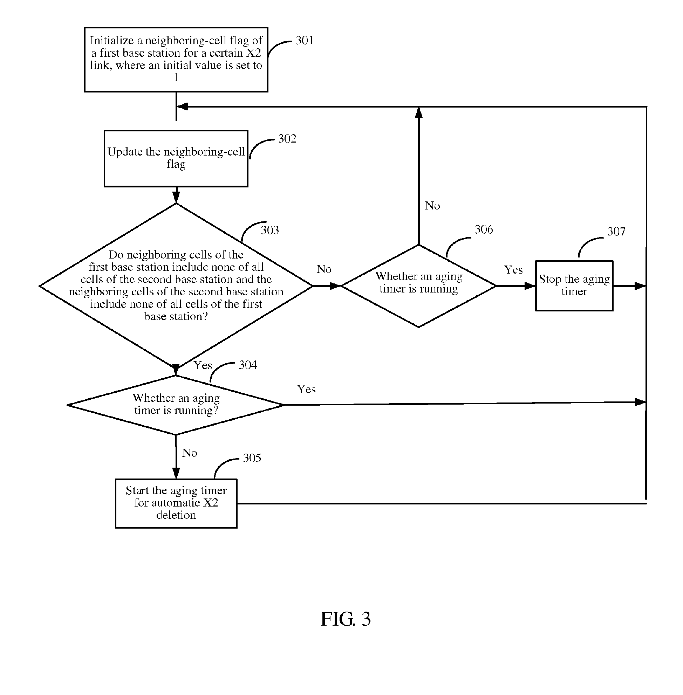

Based on the introduction of the foregoing embodiment, an embodiment of the present invention further provides a more detailed example for a solution. In this solution, each cell of each X2-interface peer end (that is, a second base station) of a first base station uses a neighboring-cell flag to indicate whether the cell is a neighboring cell of the first base station, and provides an optional execution time sequence solution. It may be understood that it may not be necessary to use a neighboring-cell flag to indicate an identification method for determining whether a cell is a neighboring cell and that the subsequent time sequence is merely an example of numerous execution time sequences, which should not be construed as a limitation on this embodiment of the present invention. Refer to the solution shown in FIG. 3, including:

301: Initialize a neighboring-cell flag of a first base station for a certain X2 interface, where the neighboring-cell flag is initially set to 1.

Assuming that two ends of the X2 interface are the first base station and a second base station separately, neighboring-cell flags of all cells (assuming that cells with numbers 1-m exist) of the second base station are first set to 1, that is, the first base station is set as a neighboring cell for all cells of the second base station, as shown in the following Table 2:

**Table 2**

| **One End of the X2 Interface** | **The Other End of the X2 Interface** | **Peer Cell** | **Neighboring-Cell Flag** |
|---|---|---|---|
| First base station | Second base station | 1 | 1 |
| First base station | Second base station | 2 | 1 |
| First base station | Second base station | ... | 1 |
| First base station | Second base station | m | 1 |

302: After the first base station acquires neighboring-cell configuration data of the second base station, the first base station updates the neighboring-cell flag.

A manner of receiving, by the first base station, neighboring-cell configuration data may be using an X2 interface protocol message, such as an X2 SETUP REQUEST (X2 SETUP REQUEST), an X2 SETUP RESPONSE (X2 SETUP RESPONSE), and an ENB CONFIGURATION UPDATE (ENB CONFIGURATION UPDATE) in 36.423, to acquire the neighboring-cell configuration data of the second base station. It may be understood that the number of second base stations may be one or greater than one, and if the number of second base stations is greater than one, a solution for executing, by each base station as an independent entity, the method for automatic X2 configuration deletion is the same as a solution for executing, by one base station, the method for automatic X2 configuration deletion.

Specifically, it is assumed that the received neighboring-cell configuration data is shown in Table 3:

**Table 3**

| **One End of the X2 Interface** | **The Other End of the X2 Interface** | **Peer Cell** | **Neighboring-Cell Flag** |
|---|---|---|---|
| First base station | Second base station | 2 | 0 |
| First base station | Second base station | ... | 0 |

Table 3 may include only a changed neighboring-cell flag, where the neighboring-cell flag 0 indicates that the first base station is not configured as a neighboring cell for a cell corresponding to the neighboring-cell flag. After Table 3 is received, Table 1 is updated to the following Table 4:

**Table 4**

| **One End of the X2 Interface** | **The Other End of the X2 Interface** | **Peer Cell** | **Neighboring Cell Flag** |
|---|---|---|---|
| First base station | Second base station | 1 | 1 |
| First base station | Second base station | 2 | 0 |
| First base station | Second base station | ... | 0 |
| First base station | Second base station | m | 1 |

If neighboring-cell configuration data in Table 5 is received subsequently, where Table 5 is shown as follows:

**Table 5**

| **One End of the X2 Interface** | **The Other End of the X2 Interface** | **Peer Cell** | **Neighboring Cell Flag** |
|---|---|---|---|
| First base station | Second base station | 1 | 0 |
| First base station | Second base station | m | 0 |

a table showing neighboring-cell configuration data of the first base station should be updated to the following Table 6:

**Table 6**

| **One End of the X2 Interface** | **The Other End of the X2 Interface** | **Peer Cell** | **Neighboring Cell Flag** |
|---|---|---|---|
| First base station | Second base station | 1 | 0 |
| First base station | Second base station | 2 | 0 |
| First base station | Second base station | ... | 0 |
| First base station | Second base station | m | 0 |

As can be seen from Table 6, neighboring cells of the second base station include none of all cells of the first base station, that is, the first base station is not configured as a neighboring cell for all cells of the second base station.

303: The first base station determines whether the following is met: neighboring cells of the first base station include none of all cells of the second base station and the neighboring cells of the second base station include none of all cells of the first base station; if the neighboring cells of the first base station include none of all cells of the second base station and the neighboring cells of the second base station include none of all cells of the first base station, proceed to 304; otherwise, proceed to 306.

It can be known, according to Table 6, that the neighboring cells of the second base station include none of all cells of the first base station. For a solution for determining whether the neighboring cells of the first base station include none of all cells of the second base station, reference may be made to a solution for determining whether the neighboring cells of the second base station include none of all cells of the first base station, and details are not described herein again.

304: Determine whether an X2 aging timer is running; if yes, proceed to 302; and if no, proceed to 305.

305: Start the X2 aging timer to start time measurement, and proceed to 302.

306: Determine whether an X2 aging timer is running; if yes, proceed to 307; and if no, proceed to 302.

307: Stop the aging timer, that is, stop time measurement.

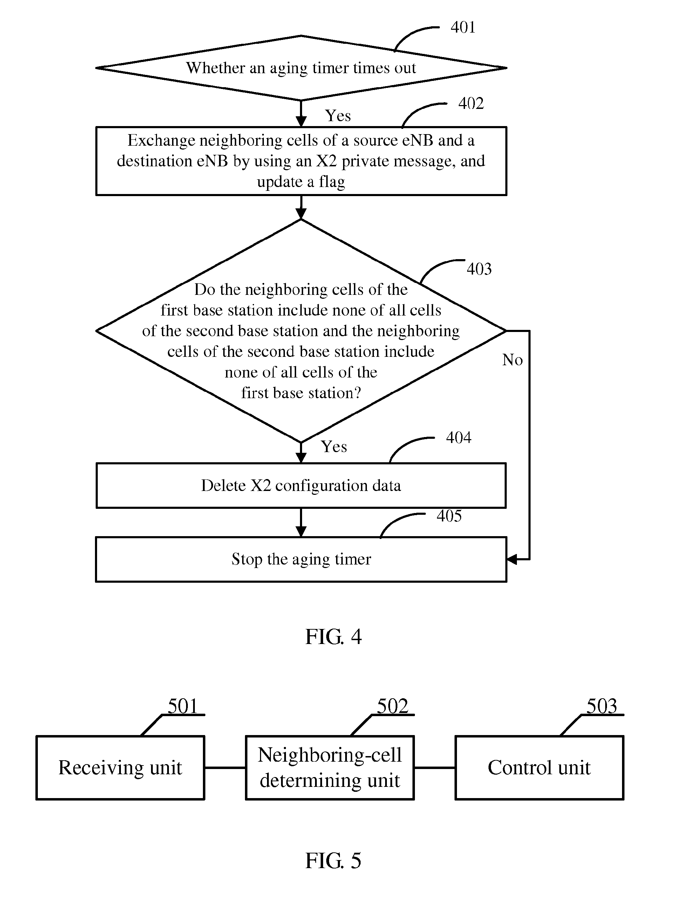

With use of the solution in FIG. 3, a result that can be learned is as follows: The neighboring cells of the first base station include none of all cells of the second base station and the neighboring cells of the second base station include none of all cells of the first base station, and whether state in which none of all cells are included remains all the time when the timer performs the time measurement. Based on the foregoing solution, for a specific solution for controlling deletion of X2 configuration data, refer to FIG. 4, including:

401: Determine whether an aging timer times out; if the aging timer does not time out, proceed with the determining, and if the aging timer times out, proceed to 402. It may be understood that this step may be implemented by using a manner instead of this cyclic determining manner, for example, a signal for triggering step 402 may be sent when the aging timer times out, so as to proceed to 402.

Time measurement duration of the timer may be fixed, or may be set according to a configuration command that is sent by an external device and received by the timer, and a manner of determining the duration of the timer is not limited in this embodiment of the present invention.

402: Exchange neighboring-cell configuration data of a first base station and a second base station by using an X2 first message, and update neighboring-cell flags.

For a specific solution for updating the neighboring-cell flag, refer to the update examples in Table 4 and Table 6 in the preceding embodiments, and therefore details are not described herein again.

In this step, the first message sent by the first base station to the second base station may not only include an indication of requesting the second base station to return full neighboring-cell configuration data of the second base station, but also include all full neighboring-cell configuration data of the first base station. The all full neighboring-cell configuration data of the first base station is sent to the second base station, and therefore it is convenient for the second base station to execute a same solution as that of the first base station to determine whether corresponding X2 configuration data needs to be deleted.

403: The first base station determines whether the following is met: the neighboring cells of the first base station include none of all cells of the second base station and the neighboring cells of the second base station include none of all cells of the first base station, that is, determine whether the neighboring cells of the first base station and the second base station include none of all cells at a peer end of an X2 interface; and if yes, proceed to 404, and if no, proceed to 405.

404: Delete X2 configuration data.

405: Stop the aging timer.

In the foregoing solution, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

In this embodiment, it can be monitored, by using the solution of using an aging timer, whether the neighboring cells of the first base station and the second base station still include none of all cells of their respective peer ends during expiration of the timer, that is, the state in which the neighboring cells of the first base station and the second base station still include none of all cells of their respective peer ends is stable; and in this case, an accuracy rate of determining that the X2 interface between the first base station and the second base station is redundant is higher. Therefore, a risk of deleting the X2 configuration data by mistake can be reduced.

In this embodiment, exchange and determining of full neighboring cells are performed by using a mechanism of an X2 first message; and with use of the message, a local end and a peer end of the X2 interface (that is, the first base station and the second base station) can be triggered to execute an action of deleting X2 configuration data simultaneously, so that a link alarm at a transport layer caused by inconsistent deletion time can be avoided.

As shown in FIG. 5, an embodiment of the present invention further provides a base station, including:
a receiving unit 501, configured to acquire neighboring-cell configuration data of a second base station, where the base station is a first base station;
a neighboring-cell determining unit 502, configured to determine, according to neighboring-cell configuration data of the first base station and the neighboring-cell configuration data of the second base station, whether a neighboring-cell relationship exists between the first base station and the second base station; and
a control unit 503, configured to delete X2 configuration data corresponding to an X2 interface between the first base station and the second base station if the neighboring-cell determining unit 502 determines that the neighboring cells of the first base station include none of all cells of the second base station and the neighboring cells of the second base station include none of all cells of the first base station.

In the foregoing solution, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

Optionally, the neighboring-cell determining unit 502 is specifically configured to determine, according to the neighboring-cell configuration data of the first base station, whether neighboring cells of the first base station include none of all cells of the second base station, and determine, according to the neighboring-cell configuration data of the second base station received by the receiving unit 501, whether neighboring cells of the second base station include none of all cells of the first base station.

The control unit 503 is configured to delete the X2 configuration data corresponding to the X2 interface between the first base station and the second base station if no neighboring-cell relationship exists between the first base station and the second base station.

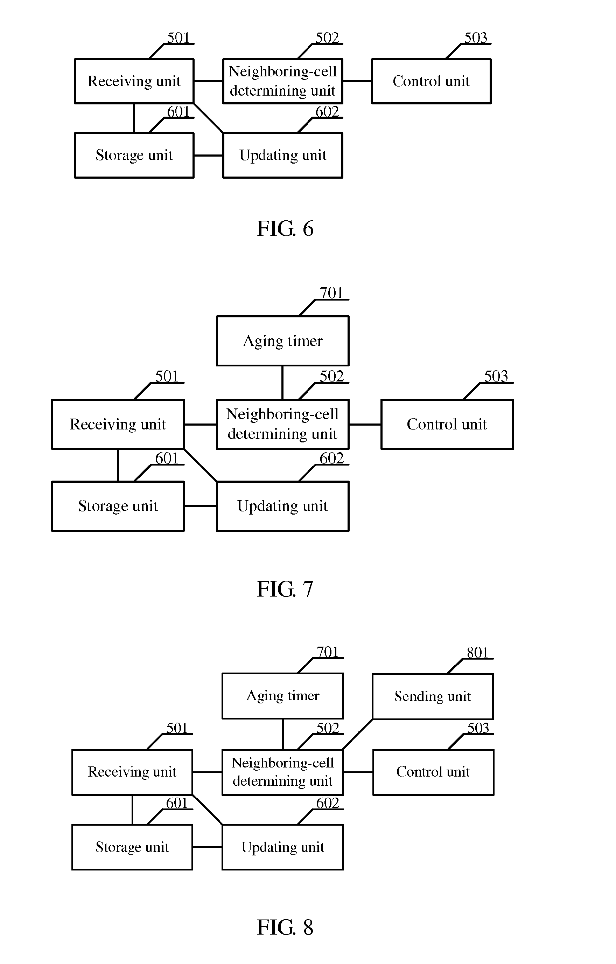

Further, after the neighboring-cell configuration data of the second base station is acquired, neighboring-cell configuration data sent by the second base station subsequently may not be full neighboring-cell configuration data, but may be only a changed part, that is, update information of the neighboring-cell configuration data. Specifically, as shown in FIG. 6, the base station further includes:

A storage unit 601, configured to store a flag for each cell of the second base station, where the flag is used to identify whether to configure the first base station as a neighboring cell;

The receiving unit 501, further configured to acquire update information of the neighboring-cell configuration data of the second base station; and

An updating unit 602, configured to, if the receiving unit 501 receives the update information of the neighboring-cell configuration data of the second base station, use the update information to update the flag stored by the storage unit 601.

Further, to reduce a risk of deleting the X2 configuration data by mistake, this embodiment of the present invention further provides the following solution: As shown in FIG. 7, the base station further includes:
an aging timer 701, starting after the neighboring-cell determining unit 502 determines that the neighboring cells of the first base station include none of all cells of the second base station and the neighboring cells of the second base station include none of all cells of the first base station and before the control unit 503 deletes the X2 configuration data corresponding to the X2 interface between the first base station and the second base station;
the neighboring-cell determining unit 502, further configured to determine, before the aging timer 701 expires, whether the neighboring cells of the first base station still include none of all cells of the second base station and whether the neighboring cells of the second base station still include none of all cells of the first base station; and
the control unit 503, specifically configured to execute the deleting X2 configuration data corresponding to an X2 interface between the first base station and the second base station if the neighboring-cell determining unit 502 determines, before the aging timer 701 times out, that the neighboring cells of the first base station still include none of all cells of the second base station and that the neighboring cells of the second base station still include none of all cells of the first base station.

In this embodiment, it can be monitored, by using the solution of using an aging timer, whether the neighboring cells of the first base station and the second base station still include none of all cells of their respective peer ends during expiration of the timer, that is, the state in which the neighboring cells of the first base station and the second base station still include none of all cells of their respective peer ends is stable; and in this case, an accuracy rate of determining that the X2 interface between the first base station and the second base station is redundant is higher. Therefore, a risk of deleting the X2 configuration data by mistake can be reduced.

Further, to keep synchronization of X2 configuration data deletion between the first base station and the second base station, this embodiment of the present invention further provides the following solution: As shown in FIG. 8, the base station further includes:
a sending unit 801, configured to, before the control unit 503 executes the deleting X2 configuration data corresponding to an X2 interface between the first base station and the second base station, send a first message to the second base station, so as to request the second base station to return full neighboring-cell configuration data of the second base station;
the receiving unit 501, further configured to receive the full neighboring-cell configuration data of the second base station returned by the second base station;
the neighboring-cell determining unit 502, further configured to determine, according to the full neighboring-cell configuration data of the second base station received by the receiving unit 501, whether the neighboring cells of the second base station include none of all cells of the first base station; and
the control unit 503, specifically configured to delete the X2 configuration data corresponding to the X2 interface between the first base station and the second base station if the neighboring-cell determining unit 502 determines that the neighboring cells of the second base station include none of all cells of the first base station.

In this embodiment, exchange and determining of full neighboring cells are performed by using a mechanism of an X2 first message; and with use of the message, a local end and a peer end of the X2 interface (that is, the first base station and the second base station) can be triggered to execute an action of deleting X2 configuration data simultaneously, so that a link alarm at a transport layer caused by inconsistent deletion time can be avoided.

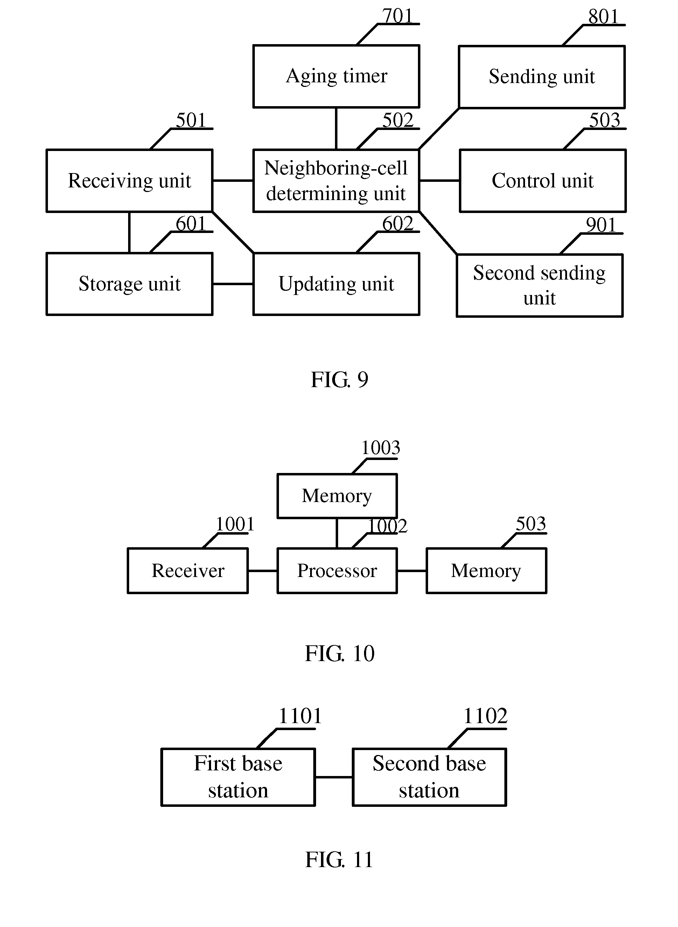

Further, it may be understood that the first base station may receive neighboring-cell configuration data of another base station and the first base station may also send the neighboring-cell configuration data of the local end to the another base station, so that the another base station automatically determines whether to delete corresponding X2 configuration data. A specific solution is as follows: As shown in FIG. 9, the base station further includes:
a second sending unit 901, configured to send the neighboring-cell configuration data of the first base station and/or update information of the neighboring-cell configuration data of the first base station to the second base station.

As shown in FIG. 10, an embodiment of the present invention further provides a base station, including: a receiver 1001, a processor 1002, a memory 1003, and a sender 1004.

The receiver 1001 is configured to acquire neighboring-cell configuration data of a second base station, where the base station is a first base station.

The processor 1002 is configured to: determine, according to neighboring-cell configuration data of the first base station and the neighboring-cell configuration data of the second base station, whether a neighboring-cell relationship exists between the first base station and the second base station, and if no neighboring-cell relationship exists between the first base station and the second base station, delete X2 configuration data corresponding to an X2 interface between the first base station and the second base station.

In the foregoing solution, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

Optionally, the processor 1002 is specifically configured to: determine, according to the neighboring-cell configuration data of the first base station, whether neighboring cells of the first base station include none of all cells of the second base station, and determine, according to the neighboring-cell configuration data of the second base station received by the receiver 1001, whether neighboring cells of the second base station include none of all cells of the first base station; and if the neighboring cells of the first base station include none of all cells of the second base station and the neighboring cells of the second base station include none of all cells of the first base station, determine that no neighboring-cell relationship exists between the first base station and the second base station.

Further, after the neighboring-cell configuration data of the second base station is acquired, neighboring-cell configuration data sent by the second base station subsequently may not be full neighboring-cell configuration data, but may be only a changed part, that is, update information of the neighboring-cell configuration data. Specifically:
the receiver 1001 is further configured for the first base station to receive update information of the neighboring-cell configuration data of the second base station;
the memory 1003 is configured to store a flag for each cell of the second base station, where the flag is used to identify whether to configure the first base station as a neighboring cell; and
the processor 1002 is further configured to, if the receiver 1001 receives the update information of the neighboring-cell configuration data of the second base station, use the update information to update the flag.

Further, to reduce a risk of deleting the X2 configuration data by mistake, this embodiment of the present invention further provides the following solution:

The processor 1002 is further configured to: start an aging timer after determining that the neighboring cells of the first base station include none of all cells of the second base station and the neighboring cells of the second base station include none of all cells of the first base station and before deleting the X2 configuration data corresponding to the X2 interface between the first base station and the second base station; and after the aging timer times out, if the neighboring cells of the first base station still include none of all cells of the second base station and the neighboring cells of the second base station still include none of all cells of the first base station, delete the X2 configuration data corresponding to the X2 interface between the first base station and the second base station.

In this embodiment, it can be monitored, by using the solution of using an aging timer, whether the neighboring cells of the first base station and the second base station still include none of all cells of their respective peer ends during expiration of the timer; that is, the state in which the neighboring cells of the first base station and the second base station still include none of all cells of their respective peer ends is stable; and in this case, an accuracy rate of determining that the X2 interface between the first base station and the second base station is redundant is higher. Therefore, the risk of deleting the X2 configuration data by mistake can be reduced.

Further, to keep synchronization of X2 configuration data deletion between the first base station and the second base station, this embodiment of the present invention further provides the following solution:
the sender 1004 is configured to, before the processor 1002 executes the deleting X2 configuration data corresponding to an X2 interface between the first base station and the second base station, send a first message to the second base station, so as to request the second base station to return full neighboring-cell configuration data of the second base station;
the receiver 1001 is further configured to receive the full neighboring-cell configuration data of the second base station returned by the second base station; and
the processor 1002 is specifically configured to: determine, according to the full neighboring-cell configuration data of the second base station received by the receiver 1001, whether the neighboring cells of the second base station include none of all cells of the first base station; and if the neighboring cells of the second base station include none of all cells of the first base station, delete the X2 configuration data corresponding to the X2 interface between the first base station and the second base station.

In this embodiment, exchange and determining of full neighboring cells are performed by using a mechanism of an X2 first message; and with use of the message, a local end and a peer end of the X2 interface (that is, the first base station and the second base station) can be triggered to execute an action of deleting X2 configuration data simultaneously, so that a link alarm at a transport layer caused by inconsistent deletion time can be avoided.

Further, it may be understood that the first base station may receive neighboring-cell configuration data of another base station and the first base station may also send the neighboring-cell configuration data of the local end to the another base station, so that the another base station automatically determines whether to delete corresponding X2 configuration data. A specific solution is as follows:

The sender 1004 is configured to send the neighboring-cell configuration data of the first base station and/or update information of the neighboring-cell configuration data of the first base station to the second base station.

As shown in FIG. 11, an embodiment of the present invention further provides a network system, including:
at least two base stations, where the two base stations include a first base station 1101 and a second base station 1102 that are provided in this embodiment of the present invention.

In the foregoing solution of the network system, a first base station is capable of acquiring neighboring-cell configuration data of a second base station and, when determining, according to neighboring-cell configuration data of the first base station, that neighboring cells of the first base station include none of all cells of the second base station and determining, according to the neighboring-cell configuration data of the second base station, that neighboring cells of the second base station include none of all cells of the first base station, deleting X2 configuration data corresponding to an X2 interface between the first base station and the second base station. This implements automatic deletion of redundant X2 configuration data and does not require that the first base station and the second base station be managed by a same network management system, thereby implementing distributed management of the X2 configuration data, so that application scenarios become wider.

In this embodiment, it can be monitored, by using the solution of using an aging timer, whether the neighboring cells of the first base station and the second base station still include none of all cells of their respective peer ends during expiration of the timer, that is, the state in which the neighboring cells of the first base station and the second base station still include none of all cells of their respective peer ends is stable; and in this case, an accuracy rate of determining that the X2 interface between the first base station and the second base station is redundant is higher. Therefore, a risk of deleting the X2 configuration data by mistake can be reduced.

In this embodiment, exchange and determining of full neighboring cells are performed by using a mechanism of an X2 first message; and with use of the message, a local end and a peer end of the X2 interface (that is, the first base station and the second base station) can be triggered to execute an action of deleting X2 configuration data simultaneously, so that a link alarm at a transport layer caused by inconsistent deletion time can be avoided.

It should be noted that the base station is classified logically only according to functions, but the present invention is not limited to the classification as long as a corresponding function can be implemented. In addition, a specific name of each functional unit is used to distinguish each other only, but not used to limit the protection scope of the present invention.

In addition, a person of ordinary skill in the art may understand that all or a part of the steps in the foregoing method embodiments may be performed by a program instructing relevant hardware. The program may be stored in a computer readable storage medium. The storage medium may be a read-only memory, a magnetic disk, or an optical disc.

The foregoing descriptions are merely exemplary specific embodiments of the present invention, but are not intended to limit the protection scope of the present invention. Any variation or replacement figured out by a person skilled in the art within the technical scope disclosed in the embodiments of the present invention shall fall within the protection scope of the present invention. Therefore, the protection scope of the present invention shall be subject to the protection scope of the claims.

## Claims

1. A method for automatic X2 configuration deletion, comprising:
Acquiring, by a first base station, neighboring-cell configuration data of a second base station;
Determining, by the first base station according to neighboring-cell configuration data of the first base station and the neighboring-cell configuration data of the second base station, whether a neighboring-cell relationship exists between the first base station and the second base station; and
if no neighboring-cell relationship exists between the first base station and the second base station, deleting X2 configuration data corresponding to an X2 interface between the first base station and the second base station.

2. The method according to claim 1, wherein the determining, by the first base station according to neighboring-cell configuration data of the first base station and the neighboring-cell configuration data of the second base station, whether a neighboring-cell relationship exists between the first base station and the second base station comprising:
determining, by the first base station according to the neighboring-cell configuration data of the first base station, whether neighboring cells of the first base station include none of all cells of the second base station, and determining, according to the neighboring-cell configuration data of the second base station, whether neighboring cells of the second base station include none of all cells of the first base station; and
if the neighboring cells of the first base station include none of all cells of the second base station and the neighboring cells of the second base station include none of all cells of the first base station, determining that no neighboring-cell relationship exists between the first base station and the second base station.

3. The method according to claim 1 or 2, further comprising:
storing a flag for each cell of the second base station, wherein the flag is used to identify whether to configure the first base station as a neighboring cell; and if the first base station acquires update information of the neighboring-cell configuration data of the second base station, using the update information to update the flag.

4. The method according to claim 2 or 3, wherein after the determining that the neighboring cells of the first base station include none of all cells of the second base station and the neighboring cells of the second base station include none of all cells of the first base station and before the deleting X2 configuration data corresponding to an X2 interface between the first base station and the second base station, the method further comprising:
starting an aging timer; and after the aging timer times out, if the neighboring cells of the first base station still include none of all cells of the second base station and the neighboring cells of the second base station still include none of all cells of the first base station, executing the deleting X2 configuration data corresponding to an X2 interface between the first base station and the second base station.

5. The method according to any one of claims 2 to 4, before the executing the deleting X2 configuration data corresponding to an X2 interface between the first base station and the second base station, the method further comprising:
sending a first message to the second base station, so as to request the second base station to return full neighboring-cell configuration data of the second base station; determining, according to the full neighboring-cell configuration data of the second base station, whether the neighboring cells of the second base station include none of all cells of the first base station; and if the neighboring cells of the second base station include none of all cells of the first base station, executing the deleting X2 configuration data corresponding to an X2 interface between the first base station and the second base station.

6. The method according to any one of claims 1 to 5, further comprising:
sending, by the first base station, the neighboring-cell configuration data of the first base station and/or update information of the neighboring-cell configuration data of the first base station to the second base station.

7. Abase station, comprising:
a receiving unit, configured to acquire neighboring-cell configuration data of a second base station, wherein the base station is a first base station;
a neighboring-cell determining unit, configured to determine, according to neighboring-cell configuration data of the first base station and the neighboring-cell configuration data of the second base station, whether a neighboring-cell relationship exists between the first base station and the second base station; and
a control unit, configured to delete X2 configuration data corresponding to an X2 interface between the first base station and the second base station if no neighboring-cell relationship exists between the first base station and the second base station.

8. The base station according to claim 7, wherein:
the neighboring-cell determining unit is specifically configured to: determine, according to the neighboring-cell configuration data of the first base station, whether neighboring cells of the first base station include none of all cells of the second base station, and determine, according to the neighboring-cell configuration data of the second base station acquired by the receiving unit, whether neighboring cells of the second base station include none of all cells of the first base station; and if the neighboring cells of the first base station include none of all cells of the second base station and the neighboring cells of the second base station include none of all cells of the first base station, determine that no neighboring-cell relationship exists between the first base station and the second base station.

9. The base station according to claim 7 or 8, further comprising:
a storage unit, configured to store a flag for each cell of the second base station, wherein the flag is used to identify whether to configure the first base station as a neighboring cell;
the receiving unit, further configured to acquire update information of the neighboring-cell configuration data of the second base station; and
an updating unit, configured to: if the receiving unit acquires the update information of the neighboring-cell configuration data of the second base station, use the update information to update the flag stored by the storage unit.

10. The base station according to claim 8 or 9, further comprising:
an aging timer, configured to start after the neighboring-cell determining unit determines that the neighboring cells of the first base station include none of all cells of the second base station and the neighboring cells of the second base station include none of all cells of the first base station and before the control unit deletes the X2 configuration data corresponding to the X2 interface between the first base station and the second base station;
the neighboring-cell determining unit, further configured to determine, after the aging timer times out, whether the neighboring cells of the first base station still include none of all cells of the second base station and whether the neighboring cells of the second base station still include none of all cells of the first base station; and
the control unit, specifically configured to execute the deleting X2 configuration data corresponding to an X2 interface between the first base station and the second base station if the neighboring-cell determining unit determines, after the aging timer times out, that the neighboring cells of the first base station still include none of all cells of the second base station and that the neighboring cells of the second base station still include none of all cells of the first base station.

11. The base station according to claims 8 to 10, wherein:
a sending unit is configured to, before the control unit executes the deleting X2 configuration data corresponding to an X2 interface between the first base station and the second base station, send a first message to the second base station, so as to request the second base station to return full neighboring-cell configuration data of the second base station;
the receiving unit is further configured to acquire the full neighboring-cell configuration data of the second base station returned by the second base station;
the neighboring-cell determining unit is further configured to determine, according to the full neighboring-cell configuration data of the second base station acquired by the receiving unit, whether the neighboring cells of the second base station include none of all cells of the first base station; and
the control unit is specifically configured to delete the X2 configuration data corresponding to the X2 interface between the first base station and the second base station if the neighboring-cell determining unit determines that the neighboring cells of the second base station include none of all cells of the first base station.

12. The base station according to claim 7 or 11, further comprising:
a second sending unit, configured to send the neighboring-cell configuration data of the first base station and/or update information of the neighboring-cell configuration data of the first base station to the second base station.

13. A base station, comprising a receiver, a processor, a memory, and a sender, wherein:
the receiver is configured to acquire neighboring-cell configuration data of a second base station, wherein the base station is a first base station; and
the processor is configured to: determine, according to neighboring-cell configuration data of the first base station and the neighboring-cell configuration data of the second base station, whether a neighboring-cell relationship exists between the first base station and the second base station, and if no neighboring-cell relationship exists between the first base station and the second base station, delete X2 configuration data corresponding to an X2 interface between the first base station and the second base station.

14. The base station according to claim 13, wherein:
the processor is specifically configured to: determine, according to the neighboring-cell configuration data of the first base station, whether neighboring cells of the first base station include none of all cells of the second base station, and determine, according to the neighboring-cell configuration data of the second base station received by the receiver, whether neighboring cells of the second base station include none of all cells of the first base station; and if the neighboring cells of the first base station include none of all cells of the second base station and the neighboring cells of the second base station include none of all cells of the first base station, determine that no neighboring-cell relationship exists between the first base station and the second base station.

15. The base station according to claim 13 or 14, wherein:
the receiver is further configured for the first base station to receive update information of the neighboring-cell configuration data of the second base station;
the memory is configured to store a flag for each cell of the second base station, wherein the flag is used to identify whether to configure the first base station as a neighboring cell; and
the processor is further configured to, if the receiver receives the update information of the neighboring-cell configuration data of the second base station, use the update information to update the flag.

16. The base station according to claim 14 or 15, wherein:
the processor is further configured to: start an aging timer after determining that the neighboring cells of the first base station include none of all cells of the second base station and the neighboring cells of the second base station include none of all cells of the first base station and before deleting the X2 configuration data corresponding to the X2 interface between the first base station and the second base station; and after the aging timer times out, if the neighboring cells of the first base station still include none of all cells of the second base station and the neighboring cells of the second base station still include none of all cells of the first base station, delete the X2 configuration data corresponding to the X2 interface between the first base station and the second base station.

17. The base station according to any one of claims 14 to 16, wherein:
the sender is configured to, before the processor executes the deleting X2 configuration data corresponding to an X2 interface between the first base station and the second base station, send a first message to the second base station, so as to request the second base station to return full neighboring-cell configuration data of the second base station;
the receiver is further configured to receive the full neighboring-cell configuration data of the second base station returned by the second base station; and
the processor is specifically configured to: determine, according to the full neighboring-cell configuration data of the second base station received by the receiver, whether the neighboring cells of the second base station include none of all cells of the first base station; and if the neighboring cells of the second base station include none of all cells of the first base station, delete the X2 configuration data corresponding to the X2 interface between the first base station and the second base station.

18. The base station according to any one of claims 13 to 17, wherein:
the sender is configured to send the neighboring-cell configuration data of the first base station and/or update information of the neighboring-cell configuration data of the first base station to the second base station.

19. A network system, comprising:
at least two base stations, wherein the two base stations comprise the first base station and the second base station according to any one of claims 7-12 and 13-18.
